# EUROPEAN PATENT SPECIFICATION

(11) **EP 2 105 677 B1**
(45) Date of publication and mention of the grant of the patent: **30.09.2015**
(21) Application number: 08153331.7
(22) Date of filing: 26.03.2008
(51) Int. Cl.: F24F 3/16, B01D 46/44

(54) **Method for filter selecting**
Verfahren zur Filterauswahl
Procédé de sélection de filtre

(43) Date of publication of application: 30.09.2009
(73) Proprietor: MANN+HUMMEL Vokes Air AB, 512 85 Svenljunga (SE)
(72) Inventor: Johnsson, Magnus, 504 39, Borås (SE); Karlsson, Thomas, 507 53, Borås (SE)
(74) Representative: Nilsson, Lars-Magnus

(56) References cited:
- EP-A- 1 347 244
- WO-A-2004/082743
- WO-A-2007/106003
- JP-A- 2000 121 136
- US-A1- 2006 100 796
- US-A1- 2007 012 181

## Description

### Technical Field of the Invention

The present invention relates to a method for selecting a filter in a filter system. Further the present invention relates to a method for controlling the energy consumption for a filter system.

### Background of the invention

Airborne particulates are causing severe damage to human health in Europe. World Health Organization, WHO, has estimated that annual 100,000 premature death in Europe can be attributed to exposure to Particulate Matter, PM. The term "PM" refers generally to particulate matter which includes both solid particles and liquid droplets found in air. The term "PM₁₀" refers generally to particles which have a diameter less than 10 micrometers. PM₁₀ pose a health concern because they can be inhaled into and accumulate in the respiratory system. PM₁₀ as used herein, also includes particles which are less than 2.5 micrometers in diameter, that is PM_{2.5}. PM_{2.5} are referred to as "fine" particles and are believed to post the largest health risks. Because of their small size, fine particles can lodge deeply into the lungs. There are both natural and human sources of atmospheric particulates. Human sources of fine particles include various types of combustion (motor vehicles, power plants, wood burning, etc.) and some industrial processes. Particles with diameters between 2.5 and 10 micrometers are referred to as "coarse." Sources of coarse particles include crushing or grinding operations, and dust from paved or unpaved roads.

Hence, to achieve a good air quality indoors, a particle filter is regularly installed in HVAC (heating, ventilation and air conditioning) systems to clean the supply or recirculation air and to protect the equipment included in the system. The particle separation filter removes particles from the outdoor air. The air filters are classified in different filter classes by the EN779:2002 classification system and the classification is determined from the average filtration efficiency. The filter classes are G1, G2, G3, G4, F5, F6, F7, F8 and F9. G1-G4 relates to coarse dust filters and F5-F9 relates to fine dust filters. The better the filter is separating the particles the higher filter class the filter gets. In other words, the more a filter is reducing the PM level in the received air, the higher filter class the filter gets. Hence, the filter class choice affects the indoor air quality but also the energy consumption. A fine dust filter of a higher class requires more energy than a filter of a lower class, since a filter of a higher class has a higher average pressure drop and requires a more powerful ventilation fan.

Today, when installing a ventilation aggregate in a new building, a filter is included in the equipment and the commonly used filter class is F7. When the consumer later on will change the filter due on end of service life, he normally picks the same filter class without questioning the filter class.

However, one problem associated with such a method for installing a filter in a HVAC system is that the filter class choice is not the most optimal choice for the system. As mentioned above F7 is the most frequently used filter on supply air, both in city centers and rural areas. However, due to different ambient condition and different PM levels, it may be a lower or higher filter class that is the most suitable to use and not F7.

Another problem associated with such a HVAC system is the energy consumption. The fans in office buildings represent one of the larges parts of the power consumption. Accordingly, there is a need of reduce the power demand in this type of application.

Document US 2007 0012181 A1 discloses a method for traking filter life as a function of time, motor speed and sensed pollution.

There is therefore a need for an improved method for selecting a filter in a filter system.

### Summary of the Invention

In view of the above-mentioned and other drawbacks of the prior art, a general object of the present invention is to provide an improved method for selecting a filter in a filter system. An object of the present invention is to secure the air quality on the supply air. Another object of the present invention is to reduce the power consumption in a filter system without exceeding the air quality threshold for PM according to the EU directive 1999/30. Further, another object of the present invention is to give the customer a cost effective installation. These and other objects that will be apparent from the following summary and description are achieved by a method for selecting a filter in a filter system, according to the appended claims.

Thus in a first aspect, the present invention relates to a method for selecting a filter in a filter system, according to claim 1.

Throughout the method according to the first aspect of the invention, it is possible to control the supply air quality provided by the filter system and hence insure that the supply air quality does not exceeding the above mentioned threshold for PM. The method also allows a control of energy consumption of the filter system, making it possible to avoid unnecessary consumption of energy by the system. This is due to, if a filter is provided in a system with a filter parameter that is *too high,* it will be detected in the comparison step of the measured pollution level with the second desired pollution level, i.e. for example the difference is below the acceptable error range. Then the filter will be replaced with a lower filter class and another comparison step will be performed. If this comparison step resulting in a difference being in a predetermined acceptable error range, the method is ended. Accordingly, excess energy consumption of the system could be avoided and, at the same time, assuring that the air quality will meet the air quality requirements. Advantageously, a company owning the filter system could obtain economically savings by reducing the energy consumption. Moreover, by selecting an energy efficient filter it is possible to also extend the service life for the filter, since a filter of a lower filter class has a longer service life than a filter of a higher filter class. This also gives the company economically savings.

On the other hand, if the comparison step resulting with a difference being above a predetermined acceptable error range, the filter is replaced with a filter having a higher filter class. This gives the advantages as for example, the human being located in a building having the filter system with a selected filter in accordance to the present invention, could be protected from dirty air, i.e. air containing high levels of atmospheric particulates.

Moreover, the method according to the first aspect of the invention also allows to weight the choice of filter class contra fresh air, for balancing the relation between the energy consumption and fresh air.

According to at least one example embodiment of the present invention, the step of measuring a pollution level comprises the step of retrieving information of pollution level representative from sensors positioned at different locations in the surroundings of the filter system. Hereby, it is possible to achieve a filter in a filter system that is adapted to the specific environmental surrounding of the filter system. This is advantageously since the PM level is variable depending on for example the geographical location of the filter system.

According to at least another example embodiment of the present invention said method further comprising the steps of: determining a filter particle reduction provided by the filter system in which the selected filter is arranged.

According to at least another example embodiment of the present invention, said filter parameter is a filter particle reduction and wherein said step of comparing is achieved by comparing a filter particle reduction provided by the filter system with a second desired filter reduction.

According to at least another example embodiment of the present invention, said filter parameter is a filter class.

Selected steps of the method according to the present invention, such as for example the step of determining and the step of comparing, may for example be implemented by means of a computer program being executed on a computer. The same counts for the step of retrieving information of pollution level, for example by retrieving information from a sensor connected to a network such as the Internet.

In HVAC system already having a filter installed, the step of measuring a pollution level present in the air to be received by the filter system, is not required to start with. For a filter system with an existing filter it is suitable to start with the step of measuring a pollution level of the air provided by the filter system. Hence, according to a second aspect of the invention, the above mentioned and other objects are achieved through a method for selecting a filter in a filter system, the filter system comprising a filter and being adapted to receive air having a first pollution level and to provide air having a second desired reduction in pollution level. The method comprising the steps of: measuring a pollution level of the air provided by the filter system in which the filter is arranged; determining a filter particle reduction provided by the filter system in which the filter is arranged; comparing the filter particle reduction with the second desired reduction in pollution level; determining a filter parameter, if a difference resulting from the comparison is outside a predetermined acceptable error range, based on a combination of the measured pollution level of the air provided by the filter system and the second desired pollution level; and replacing, the filter such that an additional comparison step results in a difference falling within the predetermined acceptable error range.

Throughout the method according to the second aspect of the invention, it is possible to determine if the installed filter has a too high filter class, that is if the reduction in pollution level is to high. Accordingly, if a difference resulting from the comparison is above the predetermined acceptable error range, the filter class of the installed filter is too high. By replacing the filter with a filter having a lower filter class, the energy consumption of the filter system could be reduced as mentioned above and this in turn results in several advantages as mentioned above. By the method according to the second aspect of the invention, it is also possible to detect if the installed filter has a too low filter class, that is the provided air does not meet the requirement for fresh air. Accordingly, if a difference resulting from the comparison is for example below the predetermined acceptable error range, the filter class of the installed filter is too low. An installed filter having a too low filter class could result in several disadvantages such as health hazards for the people being in the building having the filter system. Accordingly, by the method according to the second aspect of the invention it is possible to assure that the air quality will meet the air quality requirements in a filter system.

Advantageously, moreover, if the step of comparing the measured pollution level with the second desired reduction in pollution level results in that a step of replacing the filter is required, it does not results in any reconstructions costs for the HVAC system since it is only the filter that has to be replaced.

According to at least another example embodiment of the present invention said method further comprising the step of: measuring a pollution level present in the air to be received by the filter system, the measured pollution level being the first pollution level.

According to at least another example embodiment of the present invention said step of determining a filter parameter is performed based of a combination of the measured pollution level present in the air to be received by the filter system and the second desired reduction in pollution level.

Any features according to the first aspect of the present invention may be incorporated in the method according to the second aspect of the invention.

According to a third aspect of the invention, the above mentioned and other objects are achieved through a method for controlling the energy consumption for a filter system adapted to provide air at a desired nominal air flow rate, the filter system comprising a ventilator and a filter selected in accordance with a method according to claim 1 or 6. The method comprising the steps of: measuring a nominal air flow rate provided by the filter system; comparing the measured nominal air flow rate with the desired nominal air flow rate; adjusting the ventilator if a difference resulting from the comparison is outside a predetermined acceptable error range such that an additional comparison step results in a difference falling within the predetermined acceptable error range. Hereby, it is possible to control the air flow rate in the filter system and hence control that enough air is supplied to the filter system. Further, the energy consumption of the filter system could be controlled based on the measurement of the air flow rate.

### Brief Description of the Drawings

These and other aspects of the present invention will now be described in more detail, with reference to the appended drawings showing at least one example embodiment of the invention, wherein:
Figure 1 is a flow chart schematically illustrating a method for selecting a filter in a filter system according to at least one example embodiment of a first aspect of the present invention;
Figure 2 illustrates a flow chart schematically illustrating a method for selecting a filter in a filter system according to at least one example embodiment of a second aspect of the present invention.

### Detailed Description of the Drawings

In the following description, the present invention is described with reference to a filter system. The filter system is installed in a building, such as for example an office building, and composing a HVAC system comprising other components known for those skilled in the art, such as a ventilation fan, a heat exchanger, ducts and air dampers. The filter system is receiving air having a first pollution level. The term "first pollution level" as used herein, refers accordingly to the particle concentration in µg/m³ of PM₁₀ the received air contains. Furthermore, the filter system is adapted to provide air having a second desired pollution level. The term "second pollution level" as used herein, refers accordingly to air that has passed the filter in the filter system, that is the supply air, and containing a desired particle concentration amount of PM₁₀. This desired second level may, for instance be based on the air quality threshold for PM according to the EU directive 1999/30. The threshold values from EU are developed for outdoor air, but due to the lack of recommendations for indoor air quality the outdoor limit values is considered as a maximum values also for indoor air.

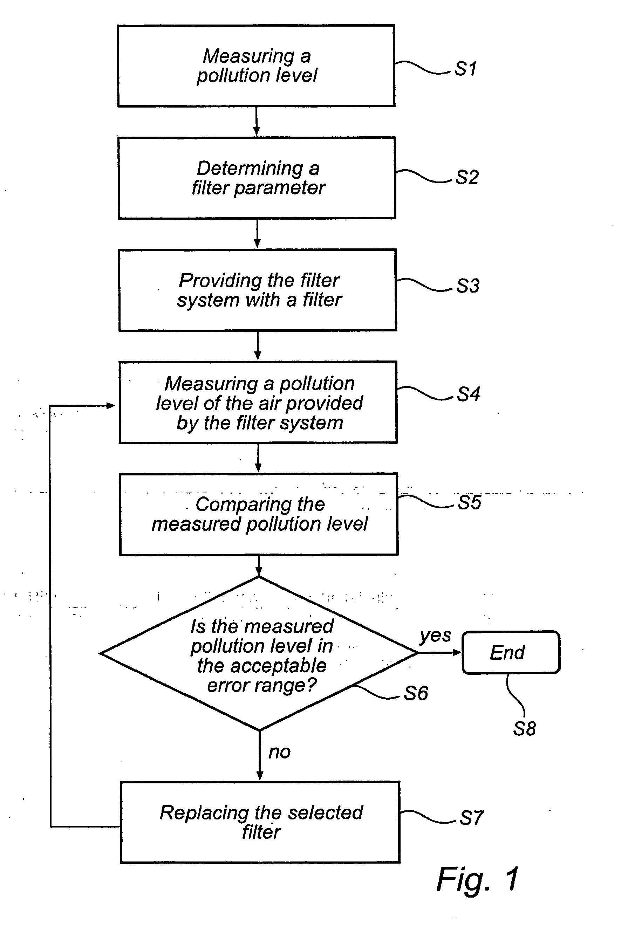

A first example embodiment of the method for selecting a filter in a filter system of the present invention is illustrated in Figure 1. In a first step, S1, a pollution level is measured of the air to be received by the filter system and this pollution level is the first pollution level. This could be done by gathering information from for example air quality measurements stations located in the specific area where the filter system is provided. Many of the European municipalities have continuous measurements of for example PM₁₀. Measurement stations are located both in city centres and in rural areas and the purpose of the measurements is to control that the outdoor air quality is in compliance with the requirements defined by the European commission. The first pollution level could for example be a value of 90 percentile of measured PM₁₀.

In a subsequent step, S2, a filter parameter is determined based on a combination of the measured pollution level and the second desired pollution level. In this example embodiment of the present invention the filter parameter could be a filter class of the EN779:2002 classification system, as described above. Furthermore, the filter parameter could be a filter particle reduction, that is the amount reduction of PM₁₀ the filter is performed in a percentage value.

First a 90 percentile value of PM₁₀ over for example one year, is calculated based on the information measured in S1. From this value of the 90 percentile of measured PM₁₀ it is possible to estimate how much the reduction of the filter in particle concentration, has to be to meet with the second desired pollution level, that is for example the requirements defined by the European commission for air quality.

Then, calculations of the 90 percentile PM₁₀ levels, for example during one year, contained in the air after passing a specific filter in the filter system, is performed. This could be performed for instance for the filter classes F5, F6 and F7. For instance, assume that filter class F5 has a particle reduction of 35% and filter class F6 has a particle reduction of 56%. By these calculations it is possible to estimate how much the various filter classes are reducing the particle concentration of PM_{10.} Furthermore, based on this calculation it is possible to select a filter that meet with for example the requirements defined by the European commission for air quality.

Moving on to the next step, S3, a filter of the determined filter class is installed in the filter system.

In the next step, S4, a pollution level of the air provided by the filter system in which the selected filter is arranged, is measured. This is performed to control that the current filter is reducing the amount of PM₁₀ sufficiently, since the particle removal efficiency varies for different filters and for different size distribution of PM₁₀. Measurements of the particle concentrations are performed downstream the selected filter. This is for example performed by providing a test filter downstream of the selected filter. The filter is weighed before and after the measurements to receive the increase in weight. Particle concentration is then obtained downstream of the filter, by dividing the increase in weight (µg) with the air volume (m³). The air flow could be controlled by an air flow meter known for those skilled in the art.

In step S5 the measured pollution level is compared with the second pollution level. This is performed to control that the selected filter is reducing the PM contained in the received air so that the supply air is meeting the requirements for fresh air, without unnecessary exceeding of the energy consumption.

The next step, S6 is to question if the measured pollution level is in a predetermined acceptable error range? The term "acceptable error range" as used herein, can for example refer to a value of PM₁₀ concentration that is within the requirement for good air quality, and that, at the same time does not exceeding the requirement for good air quality so that a lower filter class could be selected and hence reduce the energy consumption.

For example, if using the threshold value for the PM₁₀ concentration in Europe which is 50 µg/m³ , the acceptable error range is for example 40µg/m³ - 60µg/m³.

If a difference resulting from the comparison in S5 is within a predetermined acceptable error range, the answer to said question is *yes* and hence the method is completed which is illustrated in fig. 1 as step S8. On the other hand, if a difference resulting from the comparison in S5 is outside a predetermined acceptable error range, the answer to said question is no and the method is moving on to a next step, S7.

In step, S7 the filter provided in step S3 is replaced by another selected filter and this choice of filter class is depended on if the difference resulting from the first comparison is above or below the predetermined acceptable error range. If the comparison is above the predetermined acceptable error range, for example 65 µg/m³ if the acceptable error range is that described above, a new filter of a higher filter class is selected and installed. This resulting in that step S4 - S6 are repeated until the answer of the question in S6 is yes and the method is ended in S8.

On the other hand, if the comparison is below the predetermined acceptable error range, for example 36 µg/m³ if the acceptable error range is that example described above, the filter class of the installed filter is too high. This means that the air quality requirement for indoor air is met, but with an excess of the energy consumption of the system. Accordingly, the selected filter is replaced with a filter of a lower filter class and the method according to step S4 - S6 are repeated until the answer of the question in S6 is yes and the method is ended in S8.

The person skilled in the art realize that the present invention by no means is limited to the example embodiment described above. On the contrary, modifications and variations are possible within the scope of the appended claims.

For example, an alternative in step S4 is to measuring the pollution level in form of a particle concentrations both upstream and downstream the selected filter. Accordingly, a test filter is also provided upstream the selected filter and the test filter is weighed before and after the measurements to receive the increase in weight, in accordance with method of measuring the particle concentration down stream the selected filter. By these measurements a filter particle reduction (in %) of the selected filter could be calculated. To calculate the filter particle reduction (in %) of the selected filter, the down stream particle concentration is divided with the up stream particle concentration.

In step 5, the calculated filter particle reduction could be compared with a second desired filter reduction. The term "second desired filter reduction" as used herein, refers to the reduction that is required of the filter to achieve supply air containing the second desired pollution level. For example, if filter class F5 is selected in a previous step to meet with the second desired pollution level, F5 should have a filter reduction of 35%, as described above. Accordingly, the filter parameter in form of the filter reduction value of the second desired pollution level is compared with the filter parameter in form of the filter reduction value of the measured pollution level.

The next step, S6 is then to question if the measured pollution level is in the acceptable error range? The term "acceptable error range" as used in this example embodiment, refers to the filter reduction of PM₁₀ in percentage that is required for the filter system, to meet with the second desired pollution level. For example, if the filter class F5 is selected, it has a particle reduction of 35% to meet with the second desired pollution level, Then the "acceptable error range" could for example be between 25%-45%, that is 10 percentage unit above and below the percentage particle reduction for that filter class.

If a difference resulting from the comparison in S5 is within a predetermined acceptable error range, the answer to said question is *yes* and hence the method is completed which is illustrated in fig. 1 as step S8.

If a difference of the percentage particle reduction of the filter is below a predetermined acceptable error range, the filter class of the installed filter is too low. Then, a new filter of a higher filter class is selected and installed. This resulting in that step S4 - S6 are repeated until the answer of the question in S6 is yes and the method is ended in S8. If the difference of the percentage particle reduction of the filter is above a predetermined acceptable error range, the filter class of the installed filter is too high. This means that the air quality requirement for indoor air is met, but with an excess of the energy consumption of the system. Accordingly, the selected filter is replaced in S7, with a filter with a lower reduction value and the method according to step S4-S6 is repeated until the answer of the question in S6 is yes and the method is ended in S8.

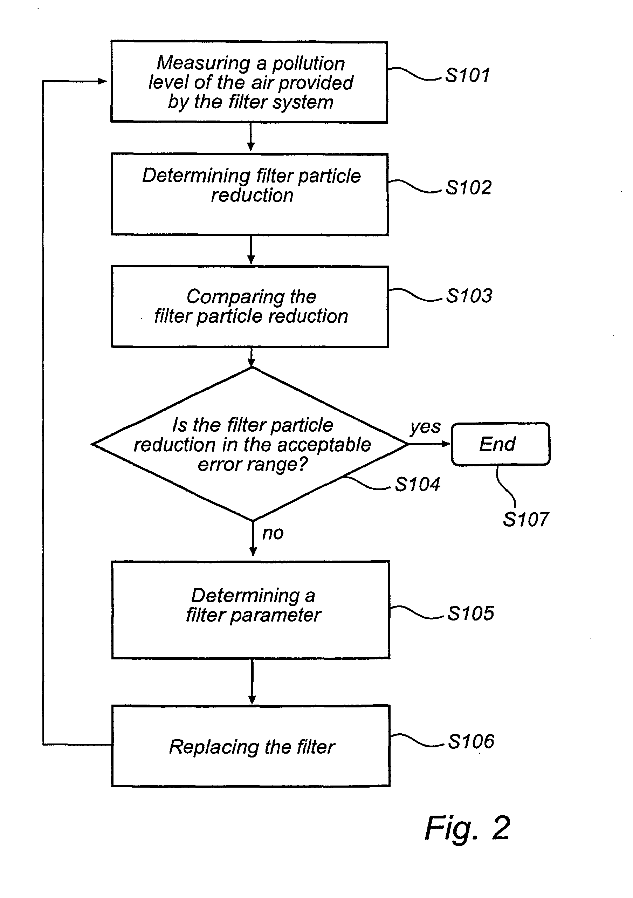

A second example embodiment of the method for selecting a filter in a filter system of the present invention is illustrated in Figure 2. It illustrates an updating of the method according to claim 1. The filter system is installed in a building as mentioned before, and comprising, besides the aforementioned parts, an existing filter. The term "first pollution level" as used herein, refers as mentioned before to the particle concentration in µg/m³ of PM₁₀ the received air contains. Furthermore, the filter system is adapted to provide air having a second desired reduction in pollution level. The term "second desired reduction in pollution level" as used herein, refers accordingly to the desired reduction (in %) in the pollution level of the air after passing the existing/selected filter. This could be a value desired of the owner of the filter system or a value determined from the combination of a first pollution level and a second desired pollution level, wherein the "second desired pollution level" is described above.

In a first step, S101, a pollution level is measured of the air provided by the filter system. I accordance with step S4 of the method according to the first example embodiment, a test filter is provided upstream and downstream the existing filter and the test filters are weighed before and after the measurements to receive the increase in weight.

In a subsequent step, S102, a filter particle reduction (in %) of the existing filter is determined. This is performed by divide the downstream particle concentration with the upstream particle concentration.

In the next step, S103, the filter particle reduction is compared with the second desired reduction in pollution level.

The next step, S104 is then to question if the filter particle reduction is in the acceptable error range? The term "acceptable error range" as used in this example embodiment, refers to the filter reduction of PM₁₀ in percentage that is required for the filter system, to meet with the second desired reduction in pollution level. For example, if a particle reduction of 35% is the desired reduction in pollution level, the "acceptable error range" could for example be between 25%-45%, that is 10 percentage unit above and below the percentage particle reduction. If a difference resulting from the comparison in S103 is within a predetermined acceptable error range, the answer to said question is *yes* and hence the method is completed which is illustrated in fig. 2 as step S 107.

If a difference of the percentage particle reduction of the filter is above or below a predetermined acceptable error range, the filter class of the existing filter is too high or too low. The answer to said question in S104 is hence no and the method is proceeding to step S105.

In step 105 a filter parameter is determined, based on a combination of the measured pollution level and the second desired pollution level. If for example the second desired reduction in pollution level is a value of 35%, the filter class should be one of matching the 35% reduction in pollution level. The filter parameter could hence be a filter class or a filter particle reduction.

Moving on to the next step, S106, a filter of the determined filter parameter is installed in the filter system. Then the method is repeated with the steps 101 - 104 until the answer of said question in step 104 is yes and the method is completed in step 107.

As an alternative example embodiment, the method could further comprising measuring a pollution level present in the air to be received by the filter. This measuring can, in accordance with step S2 of the method according to the first example embodiment, be used for first calculating a 90 percentile value of PM₁₀ over for example one year and then, from this calculated value, estimate the desired reduction of pollution level for meeting with a second desired pollution level, that is for example the requirements defined by the European commission for air quality. This extra step could as an example be performed after S102. Then the next step 103 is to compare the filter particle reduction and the second desired reduction in pollution level, and if the answer is no the next step of determining a filter parameter is performed. This step S105 is accordingly performed based on a combination of the measured pollution level present in the air to be received by the filter system and the second desired reduction in pollution level. Then the method is proceeding with step S106 in accordance with figure 2 and as described above.

## Claims

1. A method for selecting a filter in a filter system, the filter system being adapted to receive air having a first pollution level and to provide air having a second desired pollution level, the method comprising the steps of:
- measuring a pollution level present in the air to be received by the filter system, the measured pollution level being the first pollution level;
- determining a filter parameter based on a combination of the measured pollution level and the second pollution level;
- providing the filter system with a filter having a filter parameter matching the determined filter parameter;
- measuring a pollution level of the air provided by the filter system in which the selected filter is arranged;
- comparing the measured pollution level with the second desired pollution level; and
- replacing, if a difference resulting from the comparison is outside a predetermined acceptable error range, the filter such that an additional comparison step results in a difference falling within the predetermined acceptable error range.

2. Method according to claim 1, wherein the step of measuring a pollution level comprises the step of retrieving information of pollution level representative from sensors positioned at different locations in the surroundings of the filter system.

3. Method according to any one of the preceding claims, wherein said method further comprising the steps of:
- determining a filter particle reduction provided by the filter system in which the selected filter is arranged.

4. Method according to any one of the preceding claims, wherein said filter parameter is a filter particle reduction and wherein said step of comparing is achieved by comparing a filter particle reduction provided by the filter system with a second desired filter reduction.

5. Method according to any one of claims 1 - 3, wherein said filter parameter is a filter class.

6. Method for controlling the energy consumption for a filter system adapted to provide air at a desired nominal air flow rate, the filter system comprising a ventilator and a filter selected in accordance with a method according to claim 1, the method comprising the steps of:
- measuring a nominal air flow rate provided by the filter system;
- comparing the measured nominal air flow rate with the desired nominal air flow rate;
- adjusting the ventilator if a difference resulting from the comparison is outside a predetermined acceptable error range such that an additional comparison step results in a difference falling within the predetermined acceptable error range.

## Patentansprüche

1. Verfahren zur Auswahl eines Filters in einem Filtersystem, wobei das Filtersystem dazu geeignet ist, Luft mit einem ersten Verschmutzungsgrad zu erhalten und Luft mit einem zweiten gewünschten Verschmutzungsgrad bereitzustellen, wobei das Verfahren die folgenden Schritte umfasst:
- Messen eines Verschmutzungsgrads, der in der Luft, die von dem Filtersystem erhalten werden soll, enthalten ist, wobei der gemessene Verschmutzungsgrad der erste Verschmutzungsgrad ist;
- Bestimmen eines Filterparameters auf Basis einer Kombination des gemessenen Verschmutzungsgrads und des zweiten Verschmutzungsgrads;
- Versehen des Filtersystems mit einem Filter, das einen Filterparameter aufweist, der dem bestimmten Filterparameter entspricht;
- Messen eines Verschmutzungsgrads der Luft, die durch das Filtersystem, in dem das ausgewählte Filter angeordnet ist, bereitgestellt wird;
- Vergleichen des gemessenen Verschmutzungsrads mit dem zweiten gewünschten Verschmutzungsgrad; und
- derartiges Austauschen des Filters, wenn ein Unterschied, der sich aus dem Vergleich ergibt, außerhalb eines vorherbestimmten annehmbaren Fehlerbereichs liegt, dass ein zusätzlicher Vergleichsschritt zu einem Unterschied führt, der in den vorherbestimmten annehmbaren Fehlerbereich fällt.

2. Verfahren nach Anspruch 1, wobei der Schritt des Messens eines Verschmutzungsgrads den Schritt des Abrufens von Informationen hinsichtlich eines repräsentativen Verschmutzungsgrads von Sensoren, die an verschiedenen Stellen in der Umgebung des Filtersystems positioniert sind, umfasst.

3. Verfahren nach einem der vorhergehenden Ansprüche, wobei das Verfahren ferner den folgenden Schritt umfasst:
- Bestimmen einer Filterpartikelreduktion, die durch das Filtersystem, in dem das ausgewählte Filter angeordnet ist, bereitgestellt wird.

4. Verfahren nach einem der vorhergehenden Ansprüche, wobei der Filterparameter eine Filterpartikelreduktion ist, und wobei der Schritt des Vergleichens durch Vergleichen einer Filterpartikelreduktion, die durch das Filtersystem bereitgestellt wird, mit einer zweiten gewünschten Filterreduktion ausgeführt wird.

5. Verfahren nach einem der Ansprüche 1 bis 3, wobei der Filterparameter eine Filterklasse ist.

6. Verfahren zur Steuerung des Energieverbrauchs für ein Filtersystem, das dazu geeignet ist, Luft mit einem gewünschten Nennluftvolumenstrom bereitzustellen, wobei das Filtersystem einen Lüfter und ein Filter, welches nach einem Verfahren nach Anspruch 1 ausgewählt wurde, umfasst, wobei das Verfahren die folgenden Schritte umfasst:
- Messen eines Nennluftvolumenstroms, der durch das Filtersystem bereitgestellt wird;
- Vergleichen des gemessenen Nennluftvolumenstroms mit dem gewünschten Nennluftvolumenstrom;
- derartiges Einstellen des Lüfters, wenn ein Unterschied, der sich aus dem Vergleich ergibt, außerhalb eines vorherbestimmten annehmbaren Fehlerbereichs liegt, dass ein zusätzlicher Vergleichsschritt zu einem Unterschied führt, der in den vorherbestimmten annehmbaren Fehlerbereich fällt.

## Revendications

1. Procédé pour la sélection d'un filtre dans un système de filtre, le système de filtre étant adapté pour recevoir de l'air présentant un premier niveau de pollution et pour fournir de l'air présentant un deuxième niveau de pollution souhaité, le procédé comprenant les étapes suivantes :
- mesure d'un niveau de pollution présent dans l'air destiné à être reçu par le système de filtre, le niveau de pollution mesuré étant le premier niveau de pollution ;
- détermination d'un paramètre de filtre sur la base d'une combinaison du niveau de pollution mesuré et du deuxième niveau de pollution ;
- équipement du système de filtre avec un filtre présentant un paramètre correspondant au paramètre de filtre déterminé ;
- mesure d'un niveau de pollution de l'air fourni par le système de filtre dans lequel le filtre sélectionné est installé ;
- comparaison du niveau de pollution mesuré avec le deuxième niveau de pollution souhaité ; et
- remplacement du filtre lorsqu'une différence résultant de la comparaison tombe en dehors d'une plage d'erreur acceptable prédéterminée, de manière à ce qu'une étape de comparaison supplémentaire résulte dans une différence tombant dans la plage d'erreur acceptable prédéterminée.

2. Procédé selon la revendication 1, dans lequel l'étape de mesure d'un niveau de pollution comprend l'étape de collecte d'informations concernant le niveau de pollution représentatif auprès de capteurs positionnés à différents endroits dans l'environnement du système de filtre.

3. Procédé selon l'une quelconque des revendications précédentes, ledit procédé comprenant en outre les étapes suivantes :
- détermination d'une réduction de particules de filtre assurée par le système de filtre dans lequel le filtre est installé.

4. Procédé selon l'une quelconque des revendications précédentes, dans lequel ledit paramètre de filtre est une réduction de particules de filtre, et dans lequel ladite étape de comparaison est exécutée en comparant une réduction de particules de filtre assurée par le système de filtre avec une deuxième réduction de filtre souhaitée.

5. Procédé selon l'une quelconque des revendications 1 à 3, dans lequel ledit paramètre de filtre est une classe de filtre.

6. Procédé de contrôle de la consommation d'énergie pour un système de filtre adapté pour fournir de l'air avec un débit d'air nominal souhaité, le système de filtre comprenant un ventilateur et un filtre sélectionné selon un procédé selon la revendication 1, le procédé comprenant les étapes suivantes :
- mesure d'un débit d'air nominal fourni par le système de filtre ;
- comparaison du débit d'air nominal mesuré avec le débit d'air nominal souhaité ;
- réglage du ventilateur lorsqu'une différence résultant de la comparaison tombe en dehors d'une plage d'erreur acceptable prédéterminée, de manière à ce qu'une étape de comparaison supplémentaire résulte dans une différence tombant dans la plage d'erreur acceptable prédéterminée.
